# EUROPEAN PATENT SPECIFICATION

(11) **EP 1 747 093 B1**
(45) Date of publication and mention of the grant of the patent: **07.07.2010**
(21) Application number: 04731888.6
(22) Date of filing: 10.05.2004
(51) Int. Cl.: B29D 30/16, B29D 30/60, B29D 30/62, B60C 11/00

(54) **TYRE MANUFACTURING PROCESS**
REIFENHERSTELLUNGSVERFAHREN
PROCEDE DE FABRICATION DE PNEUS

(43) Date of publication of application: 31.01.2007
(73) Proprietor: PIRELLI TYRE S.p.A., 20126 Milano (IT)
(72) Inventor: LACAGNINA, Claudio, Pirelli Pneumatici S.P.A., I-20126 Milano (IT); NOTO, Rodolfo, Pirelli Pneumatici S.p.A., I-20126 Milano (IT)
(74) Representative: Giannesi, Pier Giovanni
(86) International application number: PCT/EP2004/004967
(87) International publication number: WO 2005/108048

(56) References cited:
- EP-A- 0 658 452
- EP-A- 0 794 049
- EP-A- 1 241 026
- WO-A-00/35666
- WO-A-2004/041521
- PATENT ABSTRACTS OF JAPAN vol. 1996, no. 02, 29 February 1996 (1996-02-29) & JP 07 266451 A (BRIDGESTONE CORP), 17 October 1995 (1995-10-17)
- PATENT ABSTRACTS OF JAPAN vol. 016, no. 428 (M-1307), 8 September 1992 (1992-09-08) & JP 04 146122 A (YOKOHAMA RUBBER CO LTD:THE), 20 May 1992 (1992-05-20)
- PATENT ABSTRACTS OF JAPAN vol. 1998, no. 14, 31 December 1998 (1998-12-31) -& JP 10 249955 A (BRIDGESTONE CORP), 22 September 1998 (1998-09-22)

## Description

The present invention relates to a process for manufacturing a tyre according to the preamble of claim 1.

Tyres which are provided with at least one structural element made of at least two different elastomeric materials are known in the art.

For instance, tread bands having distinct portions made of different elastomeric materials are generally provided to obtain tyres which can ensure a good compromise of different properties, such as low rolling resistance, good kilometric yield, comfort and road handling, while maintaining satisfactory traction features on dry, wet or snow-covered surfaces, also in the case high operating speeds (e g. higher than 200 km/h) and/or extreme driving conditions are involved.

Tread bands provided with at least two distinct portions made of different elastomeric materials are disclosed for instance, in US-4,319,620 and in EP-864, 447 (in the name of the same Applicant).

EP 0 794 049 A2 corresponding to the preamble of the claim 1, relates to a winding method and apparatus. More particularly, it relates to a method and apparatus for winding a plurality of material strips about a takeup member. The material strips may be belted tyre components for a tyre, which components are wound spirally about the left-hand and right-hand sides of a drum.

JP 07 266451 relates to a production of ultra-flat pneumatic radial tyre. More particularly it relates to the production of a radial tyre excellent in the productivity while preventing the occurrence of cracking in a side part by assembling side rubbers in a state expanded into a toroidal shape.

JP 04 146122 is related to contrive an improvement in accuracy in uniformity of a tire along with an improvement in sticking accuracy, by a method wherein a central tread and a right and left shoulder treads obtained through molding by dividing into three are stuck by deviating phases of spliced positions of a circumferential direction of the tire of them.

JP 10 249955 discloses how to stick a highly precise member by a method wherein an almost V-shaped groove for marking is provided in a lengthwise direction of a surface of a rubber extruding member, and a depth of the groove and a width of the groove on the surface are specified.

EP ]. 241 026 A2 discloses a tyre which is suited to heavy-load vehicles and in which generation of cracks from groove bottoms of tread grooves (circumferential directions in particular) and growth of generated cracks can be suppressed.

WO 2004/041521 in the name of the same Applicant discloses how to manufacture the tread band in a tyre building processes, by winding up of a continuous strip-like element into coils disposed in side by side relationship directly on the belt structure.

The European patent EP-928,680 - in the name of the same Applicant - discloses the manufacturing of a tyre by consecutively producing and assembling together on a toroidal support the tyre structural elements. In details, the tyre is manufactured by axially overlapping and/or radially superimposing turns of a strip-like element on the toroidal support, said strip-like element being a strip of an elastomeric material only, or a strip of elastomeric material embedding reinforcing elements thereinto (typically textile or metal cords), or a rubberized metal wire or cord.

According to said process, the toroidal support is moved, preferably by a robotized system, to sequentially reach a plurality of work stations, where, through automated sequences, different building steps of the tyre are carried out.

The manufacturing process further comprises the successive step of moulding the crude tyre, so as to confer to the latter a desired tread pattern, and the step of curing the crude tyre, so as to stabilize its geometrical conformation by curing the elastomeric materials forming the tyre itself. Such a tyre manufacturing process is described, for instance, in the European Patent EP-976,533 in the name of the same Applicant.

According to the tyre manufacturing process disclosed in the European Patent EP-928,680 mentioned above, tyres with different sizes and/or different internal structures (e.g. different number of carcass plies or belt layers, presence of elastomeric or reinforced inserts in specific regions of the tyre structure) can be manufactured simultaneously in the same plant thanks to a suitable electronic control of the work stations - which operate consecutively according to a predetermined sequence - and to the great production flexibility of the same.

According to said more recent processes mentioned above, some tyre structural elements - such as, for instance, the tread band or the liner - are generally obtained by winding, on the tyre being formed or directly on a supporting device, a continuous elongate element made of crude elastomeric material so as to form a plurality of coils axially arranged side-by-side and/or radially Superimposed.

In the case a tyre structural element comprises at least two distinct portions made of the same elastomeric material and axially spaced apart from each other, according to the known tyre manufacturing processes the step of providing said tyre structural element requires that the provision of a continuous elongate element and the winding thereof are interrupted when a first portion of the tyre structural element is completed and successively restarted in correspondence of an axially spaced apart position where a second portion of the tyre structural element has to be provided.

The formation of a third portion of the tyre structural element can be carried out before the formation of the first and second portions thereof.

Such a process is described, for instance, in document EP-1,175,992 which discloses a method for producing a tyre tread provided with an electrically conductive layer which is formed by using an uncured high electrically conductive rubber ribbon. Said ribbon is wound on a circumference of the tyre as at least an outermost layer at a given height in a radial direction under the rotation of the tyre, the uncured tread rubber being wound on the circumference of the tyre before or after the winding of said ribbon.

The Applicant has observed that the processes mentioned above remarkably increase the manufacturing time of the tyre structural element and consequently the overall manufacturing time of the tyre comprising said structural element.

In detail, the Applicant has observed that the manufacturing time remarkably increases whenever the manufacturing of the tyre structural element is interrupted and successively restarted to obtain the distinct portions which form the tyre structural element.

The Applicant has noted that the increase in the manufacturing time of the tyre structural element is due to at least two different reasons.

Firstly, every time the feeding of the continuous elongate element is interrupted, at least one relative movement between the supporting device - on which the tyre is being formed - and the feeding device - which provides the continuous elongate element - is required in order to move away the feeding device from the supporting device and then to approach the feeding device to the position in which the winding of the tyre structural element has to be restarted. This increases the overall manufacturing of the tyre.

Secondly, the feeding device is subjected to transient states every time the feeding is started or interrupted. In fact, the pressure within the feeding device requires to be gradually increased or decreased in order to obtain a predetermined and constant feeding speed or to reduce the latter to zero. As a consequence, a certain period of time is needed to complete the transient state, which mainly depends on the flow rate and the viscosity of the elastomeric material which is used as well as on the output cross section of the feeding device (i.e. on the transverse dimensions of the elongate element).

Therefore, according to the known processes mentioned above, at least two additional transient states are required during the deposition steps of the first and second portions made of the same elastomeric material.

This means that the overall manufacturing time of the tyre structural element increases since the steps mentioned above are time-consuming and non-productive - Therefore, the Applicant has perceived that a remarkable increase of the production rate of a tyre manufacturing plant, can be obtained by reducing the manufacturing time of a tyre structural element which comprises at least two distinct portions axially spaced apart from each other and made of the same elastomeric material.

In particular, the Applicant has perceived that the manufacturing time of such a tyre structural element can be remarkably decreased by continuously forming said tyre structural element without interrupting and restarting the feeding and the winding of the continuous elongate element which is used to obtain said at least two distinct portions.

More in particular, the Applicant has perceived that the formation of said at least two distinct portions by continuously feeding and winding the continuous elongate element while providing a relative roto-translational movement between the feeding device and the crude tyre allows to eliminate some transient states of the feeding device, as well as some relative movement between the latter and the supporting device on which the tyre is formed so as to remarkably decrease the overall manufacturing time of the tyre:

In details, the process for manufacturing a tyre according to the invention comprises the features disclosed in claim 1.

Particular embodiments of the invention are the subject of the dependent claims.

Preferably, when the first portion of the tyre structural element is completed, the relative roto-translational movement between the supporting device and the feeding device is incremented while continuing supplying the continuous elongate element.

More preferably, since the roto-translational movement results from a relative rotational speed combined with a relative translational speed, at the end of the step of forming the first portion of the tyre structural element, the relative rotational speed is increased to provide the continuously fed elongate element in correspondence of the position in which the deposition of the second portion has to be started.

Even more preferably, the rotational speed of the supporting device is increased. An increase in the rotational speed of the supporting device corresponds to an increase in the translational speed thereof so that the supporting device is rapidly moved with respect to the feeding device in order to locate the latter in the predetermined position in which the second portion of the tyre structural element has to be provided.

Preferably, the rotational speed of the supporting device is incremented while maintaining constant the feeding speed of the continuous elongate element supplied by the feeding device. Therefore, while passing from the position in which the first portion of the tyre structural element is completed to the position in, which the second portion thereof is started, the elongate element is subjected to a stretching action which reduces the cross-section area thereof, in particular the width of said elongate element.

According to the invention the tyre structural element comprises at least one third portion which is made of a second crude elastomeric material which is different from the first elastomeric material of the at least two portions and is interposed between said first and second portions, the manufacturing process of the present invention further comprises the step of forming the third portion by winding at least one further continuous elongate element which is made of said second crude elastomeric material. Said further step is carried out by means of a roto-translational movement between the supporting device and at least one further feeding device which is provided for supplying said further continuous elongate element.

Preferably, the step of forming said third portion is carried out before the step of forming the first portion.

Alternatively, the step of forming said third portion is carried out after the steps of forming the first and second portions of the tyre structural element.

According to an embodiment of the present invention,

According to an embodiment of the present invention, the tyre structural element which can be obtained with the process of the present invention is the tyre tread band, the latter comprising a first portion and a second portion that are spaced apart from each other and are made of the same elastomeric material.

Preferably, the tread band further comprises a third portion which is interposed between said first and second portions and is made of a second elastomeric material which is different from the first elastomeric material of the first and second portions.

The process of the present invention is particularly suitable for manufacturing antistatic tyres, i.e. tyres which are able to discharge to the ground the electrostatic charges accumulated on the vehicle body during running thereof.

In the case the electrostatic charges are not discharged, they give rise to a plurality of drawbacks.

For instance, at the moment the vehicle body is touched by a person or an object, thereby creating a conductive connection between the vehicle body and the ground, the electrostatic energy previously stored is completely and suddenly discharged producing an electric discharge (of high potential - e.g. in the order of 25 KV - but of very low intensity - e.g. in the order of mA).

Furthermore, said electrostatic discharges constitute a great danger during the fuel supply operations since the discharge can take place between the motor-vehicle bodywork and the fuel delivery gun.

Moreover, said electrostatic charges can also give rise to frequent electric discharges between different parts of the vehicle, causing unacceptable operating noise in the radio sets and/or any other electric or electronic apparatus installed on board of the vehicle.

It is known that tyre tread bands which are made of an elastomeric blend comprising high amounts of silica and low carbon black content are electrically insulative, thereby not allowing the electrostatic charges to be transferred from the vehicle body to the ground through the tyre. The low resistivity of the tread band is usually overcome by introducing at least one electrically conductive insert which is arranged in the tread band thickness and preferably extends over the whole circumferential extension of the tyre. The conductive insert becomes part of a conductive path which electrically connects the vehicle body - through the rim - to the ground by passing through the tyre structure. Such a technical solution is disclosed, for instance, in document EP-658,452, in the name of the same Applicant.

According to said embodiment, the first elastomeric material of the first and second portions is electrically insulative, while the third portion of the tread band (i.e. the above mentioned insert) is made of the second elastomeric material which is electrically conductive.

Preferably, the second elastomeric material has an electric resistivity not exceeding 10³ Kohm*m.

According to a further embodiment, the tyre structural element which can be obtained with the process of the present invention is the liner, i.e. the elastomeric layer which is suitable for ensuring the retention of the tyre inflating fluid.

According to a further embodiment, the tyre structural element which can be obtained with the process of the present invention is any elastomeric insert which can be provided to the tyre structure.

For instance, the tyre manufacturing process according to the present invention can comprise the step of forming the elastomeric inserts which are usually provided to truck tyres under the belt structure, at the axially outer edges thereof. Said inserts are used to support and protect the axial edges of the belt layers thereby increasing the tyre tear resistance in correspondence of the belt edges.

According to a further embodiment, the tyre manufacturing process according to the present invention can comprise the step of forming the elastomeric inserts which are usually provided to truck tyres at the axially outer edges of the belt structure, between said axial outer edges and the tread band. Generally these inserts, which are part of the tread band but are made of an elastomeric material (a low hysteresis material) which is different from the elastomeric material of the tread band, are used to decrease the thermal state of the tread band in correspondence of the axial outer edges of the belt structure.

According to a further embodiment, the tyre manufacturing process according to the present invention can comprise the step of forming the elastomeric inserts which are provided to a tyre, preferably a car tyre, to confer thereto a self-supporting property when the tyre is run under deflated conditions. Said inserts are generally provided between the liner and the carcass ply so as to increase the flexural rigidity of the sidewall when the radial force exerted by the pressurized inflation air remarkably decreases due to a puncture of the tyre. Said inserts are disclosed, for instance, in documents EP-475,258 and EP-542,252, in the name of the same Applicant.

Preferably, the process of the present invention further comprises the step of providing a crude carcass structure by assembling at least one carcass ply with at least two annular reinforcing structures.

Preferably, the process of the present invention further comprises the step of providing a belt structure in a position radially external to said carcass structure.

Additional features and advantages of the invention will be better apparent from the following description of some preferred examples of a tyre manufacturing process according to the present invention, which description is made, by way of non-limiting example, with reference to the attached drawings, wherein:
- Figure 1 is a partial cross-section view of a pneumatic tyre obtained with a process according to the present invention;
- Figure 2 is a partial schematic plan view of a robotized work station for making a tread band of a pneumatic tyre in accordance with a process of the present invention;
- Figure 3 is a schematic plan view of a robotized work station for making a tread band of a pneumatic tyre in accordance with a further embodiment of the process shown in figure 2;
- Figure 4 is a schematic perspective view of a robotized work station for making a tread band of a pneumatic tyre in accordance with a process of the present invention which makes use of a substantially rigid toroidal support;
- Figure 5 is a partial cross-section view of an antistatic pneumatic tyre obtained with a process according to the present invention, and
- Figures 6 and 7 are partial cross-section views of two pneumatic tyres obtained with a process according to the present invention.

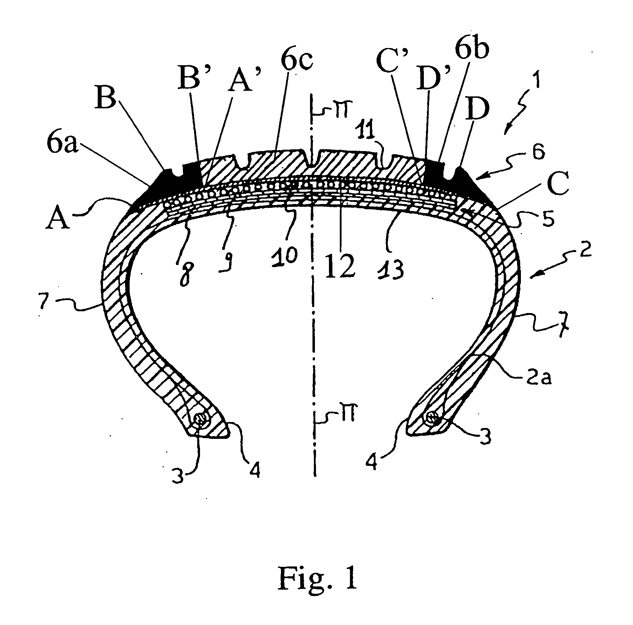

Figure 1 shows a partial cross-section view of a tyre 1 comprising a carcass structure 2 obtained with a conventional tyre manufacturing process. The carcass structure 2 comprises one carcass ply 2a, the opposite side edges of which are externally folded up around respective annular reinforcing structures 3, usually known as bead cores.

Alternatively (said example being not shown), each carcass ply 2a has its ends integrally associated with the respective bead cores 3, as disclosed in the European patent EP-928,680 mentioned above.

The bead core 3 is enclosed in a bead 4 defined along an inner circumferential edge of the pneumatic tyre 1 and at which the pneumatic tyre engages on a rim (not shown) forming part of the wheel of a vehicle.

The tyre 1 comprises a pair of sidewalls 7 which are located in axially opposite positions with respect to the carcass structure 2.

The tyre 1 also comprises a tread band 6 in a position radially external to the carcass structure 2. The tread band 6 shown in figure 1 comprises three distinct portions 6a, 6b and 6c. In details, the portions 6a, 6b are made of a first elastomeric material and are axially spaced apart from each other. The portion 6c is interposed between said two first and second portions 6a, 6b and is made of a second elastomeric material which is different from the first elastomeric material.

Furthermore, the tread band 6 is provided with a raised pattern which is formed for the tyre ground contact at the end of the curing and moulding steps of the tyre manufacturing process. In figure 1 the tread band 6 is provided with a plurality of grooves 11 which define a plurality of ribs and blocks of the tyre tread pattern.

The tyre 1 further comprises a reinforcing structure 5, usually known as belt structure, which is positioned between the carcass structure 2 and the tread band 6. Preferably, the belt structure 5 includes at least two radially superposed layers 8, 9 of rubberised fabric provided with reinforcing cords, usually of metal material, disposed parallel to each other in each layer and in crossed relationship with the cords of the adjacent layer, preferably symmetrically disposed with respect to the equatorial plane π-π of the tyre. Preferably, the belt structure 5 further comprises, at a radially external position of said belt layers 8, 9, at least one further layer 10 of textile or metallic cords substantially circumferentially disposed, said cords being spirally and coaxially wound at a radially outer position with respect to the belt layers 8, 9.

In the example shown in figure 1, the tyre 1 is further provided with a layer 12 of a suitable elastomeric material which is interposed between the tread band 6 and the belt structure 5. Preferably, the layer 12 has the function of improving the adhesion between the tread band 6 and the belt structure 5.

Finally, in tyres of the tubeless type, i.e. devoid of an air inner bladder, a radially internal elastomeric layer 13, i.e. the liner, is present which has imperviousness features to ensure the tyre air-tightness.

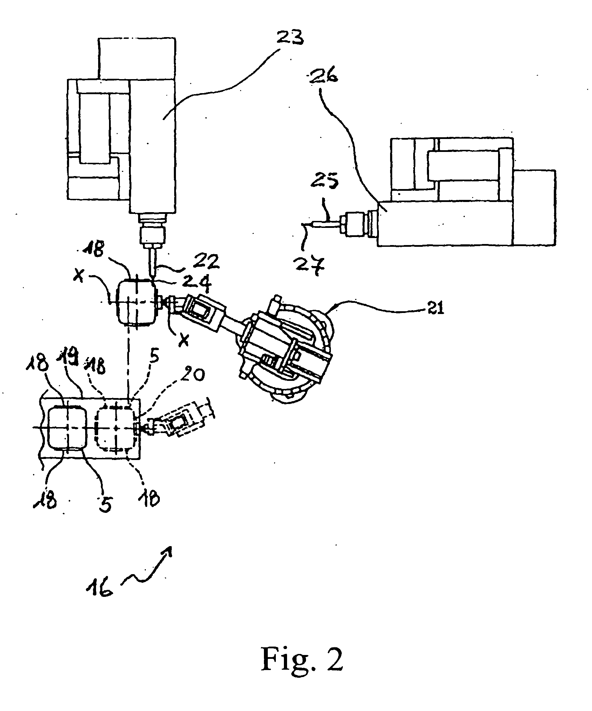

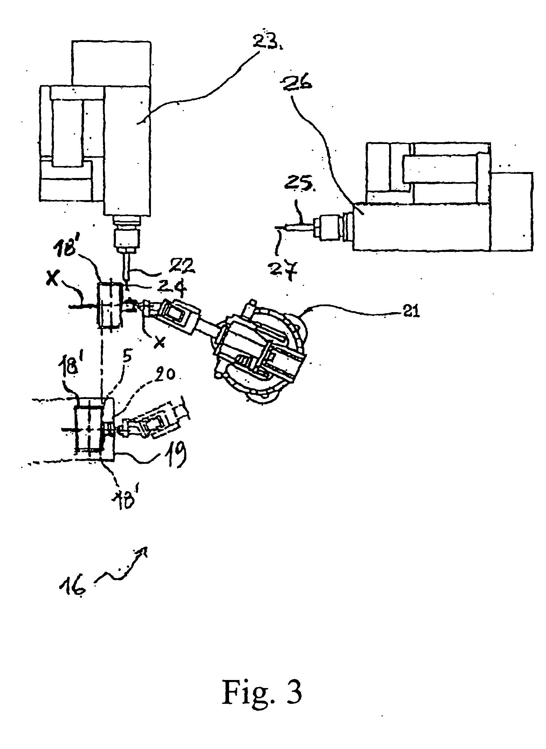

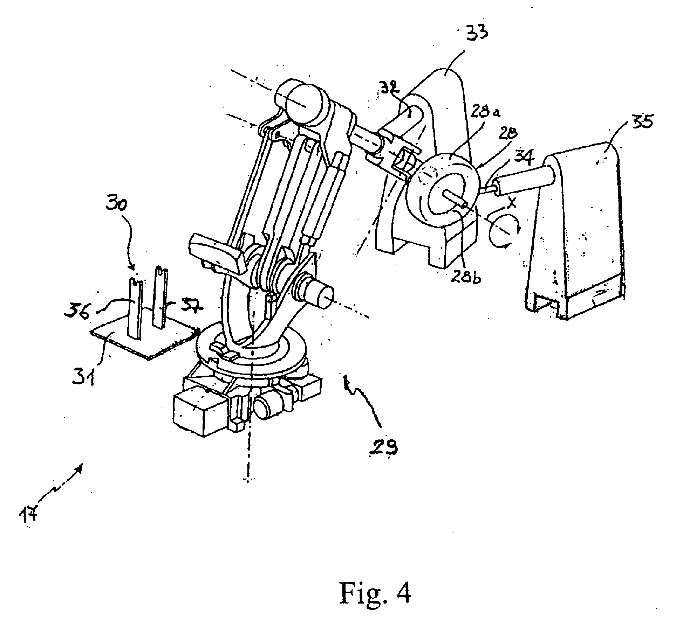

With reference to figures 2, 3 and 4, respective work stations are described, generally indicated with reference sign 16 in figures 2 and 3 and with reference sign 17 in figure 4, which are provided for manufacturing the tread band 6 of a tyre in accordance with the manufacturing process of the present invention.

In the example illustrated in figure 2, a robotized work station 16 is associated to a conventional manufacturing plant for the production of pneumatic tyres, said conventional plant being not shown in details as known per se.

In such a plant, apparatuses - known per se and not shown - are provided for manufacturing the carcass structure 2 and the annular reinforcing structure 3 associated thereto on a supporting device capable to assume a substantially toroidal configuration, such as for example a manufacturing drum 18, as well as for subsequently forming the belt structure 5 in a radially outer position with respect to the carcass structure 2.

The work station 16 comprises a robotized arm 21, preferably of the anthropomorphic type with seven axes, intended to pick up each drum 18 supporting the carcass structure 2, the annular reinforcing structure 3 and the belt structure 5 from a pick up position 20, defined at the end of a conveyor belt 19 or any other suitable transporting means, to a delivery position of the tread band 6.

In figure 2, the work station 16 further comprises a delivery member 22 of an extruder 23 which provides for a continuous elongate element 24 - having a suitable size in cross-section - which is suitable for manufacturing the portions 6a, 6b of the tyre tread band 6.

With reference to the work station 16 and to figure 2, the tyre manufacturing process comprises a plurality of preliminary steps which are carried out upstream of the work station 16. In particular, the carcass structure 2 comprising the annular reinforcing structure 3 and the belt structure 5 are manufactured and shaped on the drum 18 which assumes and then determines a substantially toroidal shape of the pneumatic tyre under construction. Said drum 18 is then transported by the conveyor belt 19 to the pick up position 20.

In a subsequent step, the robotized arm 21 positions the drum 18 in the delivery position defined at the obtain the first portion 6a and the second portion 6b of the tread band 6.

In such a delivery position, the robotized arm 21 rotates the drum 18 about its rotation axis X-X and carries out a relative displacement between the delivery member 22 and the drum 18 by also imparting to the latter a translational movement along a direction substantially parallel to the aforementioned rotation axis X-X.

Concurrently with the rotation and translation movement of the drum 18, the delivery member 22 delivers the elongate element 24 at a radially outer position with respect to the belt layer 5 as disclosed, for instance, in the European patent EP-928,680 or in the patent application WO 03/070454 in the name of the same Applicant.

The rotation and translation movement of the drum 18 is suitably driven in such a way as to carry out the deposition of at least one continuous elongate element to form a plurality of coils or windings, which are axially overlapped and/or radially superimposed so as to define the portions 6a, 6b of tread band 6.

In more details, according to a preferred example of the present invention, the feeding and subsequent winding of the continuous elongate element 24 is started at point A, which corresponds to the axially outer and radially inner position of the first portion 6a. The latter is then completed at point B, which corresponds to the axially outer and radially outer position of the first portion 6a.

According to the present invention, t the end of the formation of the portion 6a, the feeding of the continuous elongate element 24 is not interrupted and the feeding device, i.e. the delivery member 22, is located in correspondence of the position in which the winding of the continuous elongate element 24 starts forming the portion 6b.

According to the example shown in figure 1, the supporting device, i.e. the drum 18, is translated at point C, which corresponds to the axially outer and radially inner position of the second portion 6b, wherein the formation thereof is started. Successively, the feeding and winding of the continuous elongate element 24 is interrupted at point D, which corresponds to the axially outer and radially outer position of the second portion 6b, wherein the formation thereof is completed.

Alternatively, the feeding and subsequent winding of the continuous elongate element 24 is started at point A', which corresponds to the axially inner and radially inner position of the first portion 6a. The latter is then completed at point B', which corresponds to the axially inner and radially outer position of the first portion 6a.

Successively, at the end of the formation of the portion 6a, the feeding of the continuous elongate element 24 is not interrupted and the supporting device, i.e. the drum 18, is translated at point C', which corresponds to the axially inner and radially inner position of the second portion 6b, wherein the formation thereof is started.

Thus, the feeding and winding of the continuous elongate element 24 is interrupted at point D', which corresponds to the axially inner and radially outer position of the second portion 6b, wherein the formation thereof is completed.

According to said example, the delivery member 22 is stationary and the relative movement between the delivery member 22 and the crude tyre is obtained by imparting a roto-translational movement to the supporting imparting a roto-translational movement to the supporting device.

Preferably, the translation of the supporting device is obtained by varying the rotational speed thereof. More preferably, the translation of the supporting device is obtained by increasing the rotational speed thereof.

At the end of the deposition step of said first portion 6a and second portion 6b of the tread band 6, the robotized arm 21 positions the drum 18 at a second delivery position defined at a second delivery member 25 of an extruder 26. The second delivery member 25 supplies the further continuous elongate element 27 which is made of the second elastomeric material intended to form the third portion 6c of the tread band 6.

As in the case of the formation of the first and second portions 6a, 6b, the robotized arm 21 rotates the auxiliary drum 18 about its rotation axis X-X and carries out a relative displacement between the delivery member. 25 and the auxiliary drum 18 also imparting to the latter a translational movement along a direction substantially parallel to the aforementioned rotation axis X-X.

Concurrently with the rotation and translation movement of the auxiliary drum 18, the second delivery member 25 delivers the elongate element 27 in the space comprised between the first portion 6a and the second portion 6b so as to complete the tread band 6.

Also in this case, the delivery of the elongate element 27 is carried out by forming a plurality of coils axially arranged side-by-side and/or radially superposed.

Alternatively (said example being not shown), at the end of the tread band deposition step, the robotized arm 21 discharges the drum 18 - supporting the crude tyre - on a conveyor means. Successively, a rotating transferring apparatus, e.g. a manipulator, takes the drum 18 from the conveyor means and positions the drum 18 in proximity of the second delivery member 25 as mentioned above.

At the end of the formation of the tread band, the manufacturing process according to the present invention can comprise the step of storing the finished crude tyre before the moulding and curing steps are performed.

Alternatively, at the end of the formation of the tread band, the crude tyre supported on the drum 18 is transported - in a way known per se and not shown in the figures - to the subsequent work stations of the plant, e.g. the moulding and curing work stations.

According to a variant of the previous example of the process of the present invention, said example being shown in figure 3, a substantially, cylindrical auxiliary drum 18' is used on which the belt structure 5 is assembled. The auxiliary drum 18' is moved substantially in the same way as the drum 18 previously illustrated.

More precisely, the auxiliary drum 18' is positioned in proximity of the delivery member 22 of an extruder 23. Subsequently, an elongate element 24 of a first elastomeric material is delivered by the delivery member 22 onto the belt structure 5, preferably carrying out a relative displacement between the delivery member 22 and the auxiliary drum 18' so as to form the first portion 6a and the second portion 6b of the tread band 6 as disclosed above.

Subsequently, the auxiliary drum 18' is positioned in proximity of the second delivery member 25 of the second elastomeric material, and an elongate element 27 delivered by the member 25 is deposited between the first portion 6a and the second portion 6b, preferably carrying out a relative displacement between the second delivery member 25 and the auxiliary drum 18' so as to form the third portion 6c of the tread band 6.

Also in this example, the steps of delivering the aforementioned elongate elements 24, 27 of elastomeric material are preferably carried out by rotating the auxiliary drum 18' about its rotation axis.

Similarly, the aforementioned delivering steps are carried out by forming a plurality of coils axially arranged side-by-side and/or radially superposed so as to define the portions 6a, 6b and 6c of the tread band 6.

Preferably, finally, the relative displacement between the delivery members 22 and 25 and the auxiliary drum 18' is carried out by imparting to the auxiliary drum 18' a translational movement in a direction substantially parallel to its rotation axis.

Preferably, said translational movement is caused by the robotized arm 21 which holds the auxiliary drum 18'. Alternatively (not shown), the auxiliary drum 18' is hold by a supporting structure which moves the auxiliary drum 18' in proximity of the delivery members 22 and 25.

At the end of the deposition of the tread band 6, the belt structure-tread band assembly is associated to the remaining components of the tyre which have been manufactured on a different manufacturing drum. Therefore, the final assembling of the crude tyre and the subsequent shaping thereof allow to obtain the finished crude tyre which is suitable for being moulded and cured.

These preferred examples (shown in figures 2 and 3) of the process according to the invention have an advantageous and effective application when it is desired to exploit a conventional production line, making use of at least one manufacturing drum on which the semi-finished products, which shall constitute the pneumatic tyre, are at least partially formed, said conventional production line being integrated with a final robotized work station for manufacturing the tread band.

In the example illustrated in figure 4, a work station intended to manufacture the tread band 6 of the pneumatic tyre 1 is generally indicated with reference sign 17.

The work station 17 is associated to a highly automated plant for manufacturing pneumatic tyres, or for carrying out part of the working operations foreseen in the production cycle of the pneumatic tyres, said plant being not illustrated in details. Further details on such a manufacturing process are, for example, described in the European patent EP-928,680 mentioned above.

According to said process, the manufacturing of the different structural components of the pneumatic tyre 1 are carried out directly on a support 28, substantially toroidal and preferably substantially rigid, having an outer surface 28a, 28b which is substantially shaped according to the inner configuration of the pneumatic tyre.

Within such a plant, robotized work stations (not shown in figure 4) are also present for manufacturing on the toroidal support 28 the carcass structure 2 comprising the annular reinforcing structure 3 and for the subsequent formation of the belt structure 5, at a radially outer position with respect to the carcass structure 2.

The work station 17 comprises a robotized arm known per se, generally indicated with reference sign 29 and preferably of the anthropomorphic type with seven axes, intended to pick up each support 28 carrying the carcass structure 2, the annular reinforcing structure 3 and the belt structure 5 from a pick up position 30, defined at the end of two supporting arms 36, 37 of a trestle 31 or any other suitable supporting means, to a delivery position of the tread band portions.

More specifically, the delivery position of the tread band 6 is defined at a delivery member 32 of an extruder 33 which provides for at least one continuous elongate element (not shown in figure 4) for obtaining the first portion 6a and the second portion 6b of the tread band 6.

Further structural and functional details of the robotized arm 29 are described, for example, in the International patent application WO 00/35666 in the name of the same Applicant.

With reference to the work station 17 described above and to figure 4, the further preferred embodiment of the process for manufacturing a pneumatic tyre in accordance with the present invention is described herein below.

In details, said process comprises a plurality of preliminary steps which are carried out upstream of the work station 17 by means of a plurality of robotized stations, the latter providing for the manufacturing of the carcass structure 2, the annular reinforcing structure 3 and the belt structure 5 which are successively transported - supported on the toroidal support 28 - to the pick up position 30.

In a subsequent step, the robotized arm 29 positions the toroidal support 28 in proximity of the delivery position defined at the delivery member 32 which provides for the continuous elongate element made of the first elastomeric material intended to form the first portion 6a and the second portion 6b of the tread band 6.

In such a delivery position, the robotized arm 29 rotates the support 28 about its rotation axis X-X and carries out a relative displacement between the delivery member 32 and the support 28 also imparting to the latter a translational movement along a direction substantially parallel to the aforementioned rotation axis X-X, as disclosed with reference to the processes shown in figures 2 and 3.

Simultaneously with the rotation and translation movement of the support 28, the delivery member 32 delivers - by means of the extrusion 33 - the continuous elongate element at a radially outer position with respect to the belt layer 5 so as to form the two tread band portions 6a, 6b.

Preferably, the delivery of the elongate element is carried out by forming a plurality of coils axially arranged side-by-side and/or radially superposed so as to define said tread band portions.

In a subsequent step, according to the steps sequence described with reference to the embodiments of figures 2 and 3, the robotized arm 29 positions the toroidal support 28 in proximity of a second delivery position defined at a second delivery member 34 of an extruder 35, the latter being adapted to provide at least a second continuous elongate element (not visible in figure 4) made of a second elastomeric material.

In this second delivery position, the robotized arm 29 rotates the toroidal support 28 about its rotation axis X-X and carries out a relative displacement between the delivery member 34 and the toroidal support 28 also imparting to the latter a translational movement along a direction substantially parallel to the aforementioned rotation axis X-X.

Simultaneously with the rotation and translation movement of the toroidal support 28, the second delivery member 34 delivers the elongate element on the space comprised between the first portion 6a and the second portion 6b so as to form the third portion 6c of the tread band 6.

Also in this case, the delivery of the elongated element is preferably carried out by forming a plurality of coils axially arranged side-by-side and/or radially superposed.

At the end of the tread band deposition step, the crude tyre is completed by transporting the support 28 to the subsequent work stations of the plant, e.g. the moulding and curing work stations.

This different preferred example (shown in figure 4) of the process according to the invention has, in particular, an advantageous and effective application when it is desired to use production techniques which allow to minimize, or possibly eliminate, the production and storage of the semi-finished products, for example by adopting process solutions which allow to make the individual components by directly applying them on the pneumatic tyre being manufactured according to a predetermined sequence by means of a plurality of robotized work stations.

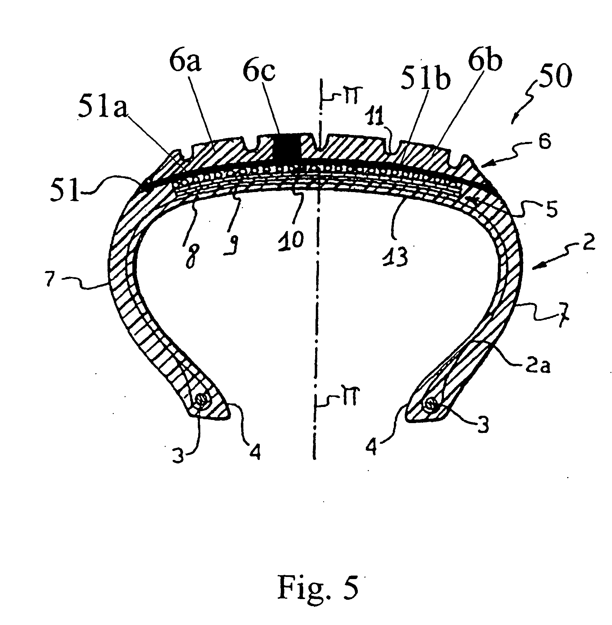

As disclosed above, the process of the present invention is particularly advantageous for the manufacturing of an antistatic tyre 50 schematically shown in figure 5.

For simplicity of description, in the appended drawings, same reference signs correspond to similar or identical components.

Antistatic tyre 50 has a tread band 6 which comprises an electrically conductive insert 6c which radially extends from the belt structure 5 to a ground contact surface of the tyre, i.e. said insert radially extends for the whole thickness of the tyre tread band 6.

In details, the tread band 6 of the tyre 50 comprises two portions 6a, 6b, which are made of a first elastomeric material and are axially separate apart from between said first and second portions 6a, 6b and is made of a second elastomeric material different from the first elastomeric material. The first elastomeric material is electrically insulative while the second elastomeric material is electrically conductive.

According to a first example of the present invention, the manufacturing process comprises the step of forming the first portion 6a and the second portion 6b of the tyre tread band 6 without interrupting the feeding and the winding of a continuous elongate element made of the first elastomeric material, as disclosed above with reference to any of the processes described in figures 2 to 4. Successively, the tyre manufacturing process comprises the step of forming the tread band third portion 6c by feeding and winding a further continuous elongate element made of the second elastomeric material in the gap comprised between the first portion 6a and the second portion 6b.

Alternatively, according to a further example of the present invention, the manufacturing process comprises the step of previously forming the tread band third portion 6c by feeding and winding a further continuous elongate element made of the second elastomeric material. Successively, the tyre manufacturing process comprises the step of forming the first portion 6a and the second portion 6b of the tyre tread band 6 without interrupting the feeding and the winding of a continuous elongate element made of the first elastomeric material.

According to said example, since the first and second portions 6a, 6b are formed when the electrically conductive third portion 6c is already formed, it is necessary that the winding of the continuous elongate element is carried out by ensuring that only a limited area of the circumferentially extended third portion 6c is overlapped by the continuous elongate element made of the first elastomeric material during the winding thereof. In fact, in order to ensure that the antistatic tyre suitably performs the discharging of the electrostatic charges, at least a portion of the electrically conductive elastomeric material of the third portion has to contact the ground during the tyre revolution.

Said objective can be achieved, for instance, by providing that the winding direction of the continuous elongate element made of the first elastomeric material lies in a plane which is inclined of an angle comprised from about 5° to about 85° with respect to the tyre equatorial plane, more preferably from about 30° to 60°. It has to be noted that, generally, the value of said angle depends on the length (in the longitudinal direction) of the tyre footprint (and thus on the tyre size), on the width of the elongate element and on the width of the electrically conductive third portion 6c.

Alternatively, said objective can be achieved, for instance, by remarkably increasing the rotational speed of the supporting device while keeping constant the feeding speed of the continuous elongate element. In such a manner, in fact, as mentioned above, the elongate element is subjected to a stretching action which reduces the cross-section area thereof, thereby reducing the overlapping of the elongate element (which is made of the electrically insulative first elastomeric material) with the already formed third portion (which is made of the electrically conductive second elastomeric material). Thus a suitable discharge of the electrostatic charges is obtained by ensuring that, during the tyre revolution, a sufficient amount of the electrically conductive elastomeric material is present in the tyre footprint area.

Preferably, the antistatic tyre 50 is further provided with a layer 51 which is made of the same electrically conductive elastomeric material of the conductive insert 6c, said layer being interposed between the belt structure 5 and the tread band 6 so that the conductive insert 6c is in electrical and physical contact with said layer 51.

According to a preferred example of the present invention, the tyre manufacturing process comprises the step of forming the layer 51 and the third portion 6c (i.e. the electrically conductive insert) - which are all made of the same second elastomeric material - before the step of forming the first and second portions 6a, 6b of the tread band 6.

In details, according to a preferred example, the step of forming the layer 51 and the third portion 6c comprises the step of forming a first portion 51b of the layer 51, for instance the layer portion which comes into contact with the second portion 6b of the tread band. When said first portion 51b of the layer 51 is completed, the feeding and winding of the further continuous elongate element is interrupted and the supporting device is translated so that the feeding device is placed in correspondence of the position where the second portion 51a of the layer 51 has to be started- Therefore, the second portion 51a of the layer 51 is completed and the formation of the third portion 6c of the tread band is executed in proximity of the axially inner edge of the second portion 51a.

The manufacturing process of the present invention is also particularly advantageous for carrying out the formation of elastomeric inserts which can be provided to the tyre structure.

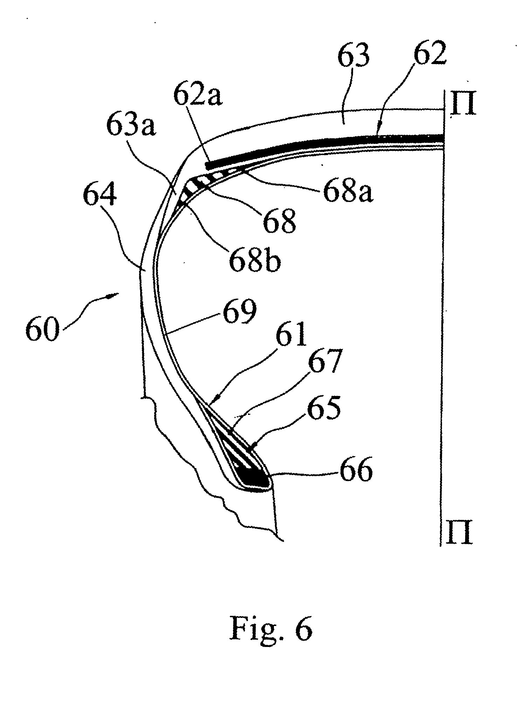

For instance, figure 6 shows a partial cross section of a truck tyre 60 which comprises a carcass structure 61, a belt structure 62 which extends circumferentially around said carcass structure 61, a tread band 63 which is applied in a position radially external to said belt structure 62 and two sidewalls 64 which are laterally applied on opposite sides of the carcass structure 61 and extend from a lateral edge 63a of the tread band 63 in proximity of a radially inner edge of the carcass structure 61.

The carcass structure comprises two beads 65 which include, respectively, a bead core 66 and an elastomeric filler 67 in a position radially external to said bead core 66.

The tyre 60 further comprises at least two inserts 68 (only one being shown in figure 6) which are interposed between the carcass structure 61 and the belt structure 62, each insert being located in proximity of the axially opposite edges 62a of the belt structure 62.

In details, each insert 68 comprises an axially inner portion 68a, which is interposed between the carcass ply 69 and the belt structure 62 and is tapered towards the equatorial plane π-π of the tyre, and an axially outer portion 68b, which is interposed between the carcass ply 69 and the correspondent sidewall 64 and is tapered towards the rotational axis of the tyre.

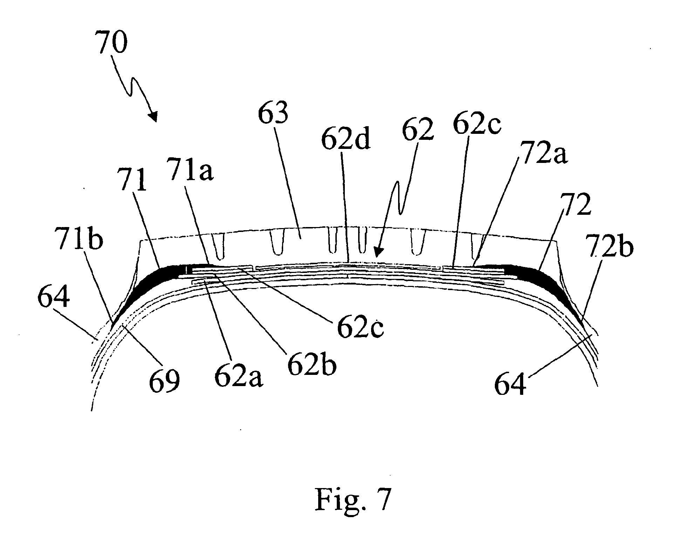

According to the example shown in figure 7 the belt structure 62 comprises two belt layers 62a, 62b which are radially superposed and comprise reinforcing cords, usually of metal material, that are disposed parallel to each other in each layer and in crossed relationship with the cords of the adjacent layer, preferably symmetrically disposed with respect to the equatorial plane π-π of the tyre.

Furthermore, the belt structure 62 comprises two belt strips 62c which are disposed in a radially outer position of said belt layers 62a, 62b and at each axially outer edges thereof, said belt strips 62c being reinforced with cords which are oriented in a substantially circumferential direction.

Moreover, the belt structure 62 comprises a further belt layer 62d which is radially external to the belt layers 62a, 62b and is interposed between the belt strips 62c. Said further belt layer 62d is provided with cords that are inclined with respect to a circumferential direction, said belt layer acting as a protection layer from stones or gravel possibly entrapped into the tread grooves and which can cause damages to the belt layers 62a, 62b and even to the carcass ply 69.

As mentioned above, the inserts 68 of the tyre 60 can be advantageously manufactured in one step according to the process of the present invention.

According to a further example, the manufacturing process of the present invention can comprise the step of forming the inserts 71, 72 of a truck tyre 70 shown in figure 7.

The inserts 71, 72 are part of the tread band 63 and are located in correspondence of the buttress areas, i.e. the areas where the axially opposite edges of the tread band are joined to the respective sidewalls of the tyre. Usually, the inserts 71, 72 are interposed between the carcass structure, the belt structure, the tread band and the sidewalls.

In details, each insert 71, 72 comprises an axially inner portion 71a, 72a, which is interposed between the belt structure 62 and the tread band 63 and is tapered towards the equatorial plane π-π of the tyre, and an axially outer portion 71b, 72b, which is interposed between the carcass ply 69 and the correspondent sidewall 64 and is tapered towards the rotational axis of the tyre.

As mentioned above, the inserts 71, 72 of the tyre 70 can be advantageously manufactured in one step according to the process of the present invention.

## Claims

1. A process for manufacturing a tyre (1; 50; 60; 70) comprising: forming a crude tyre on a supporting device (18; 18'; 28), moulding and curing said crude tyre, wherein the step of forming the crude tyre comprises providing at least one structural element (6; 68; 71, 72) including:
• at least one first portion (6a; 68; 71) made from a first crude elastomeric material, and
• at least one second portion (6b; 72) made from said first crude elastomeric material, the at least one second portion being axially spaced apart from the at least one first portion,
said step of providing the at least one structural element comprising:
• forming the at least one first portion by winding at least one continuous elongate element (24) made from said first crude elastomeric material by means of a roto-translational movement between the supporting device and at least one feeding device (22; 32) for supplying the at least one continuous elongate element;
• starting to apply the continuous elongate element in a position axially spaced apart from the at least one first portion while continuing supplying the at least one continuous elongate element so as to form the at least one second portion, and
• forming the at least one second portion by winding said at least one continuous elongate element made from said first crude elastomeric material by means of a roto-translational movement between the supporting device and the at least one feeding device;
**characterized in that** said at least one structural element comprises at least one third portion (6c) made of a second crude elastomeric material different from said first elastomeric material, said process further comprising the step of forming the at least one third portion by winding at least one further continuous elongate element (27) made from said second crude elastomeric material by means of a roto-translational movement between the supporting device (18; 18'; 28) and at least one further feeding device (25; 34) for supplying the at least one further continuous elongate element, wherein the steps of winding comprise the step of forming a plurality of coils axially arranged side-by-side and/or radially superposed.

2. Process according to claim 1, wherein said third portion (6c) is interposed between the at least one first portion (6a) and the at least one second portion (6b).

3. Process according to claim 1, wherein the step of forming the at least one third portion (6c) is carried out before the step of forming the at least one first portion (6a).

4. Process according to claim 1, wherein the step of forming the at least one third portion (6c) is carried out after the step of forming the at least one first portion (6a) and the step of forming the at least one second portion (6b).

5. Process according to claim 1, wherein said roto-translational movement results from a relative rotational speed combined with a relative translational speed.

6. Process according to claim 5, further comprising the step of increasing the relative rotational speed while continuing supplying the at least one continuous elongate element (24) at the end of the step of providing said at least one first portion (6a).

7. Process according to claim 5, further comprising the step of increasing the relative translational speed while continuing supplying the at least one continuous elongate element (24) at the end of the step of providing said at least one first portion (6a).

8. Process according to claim 1, further comprising the step of providing a crude carcass structure (2; 61) by assembling at least one carcass ply (69) with at least two annular reinforcing structures (3; 66).

9. Process according to claim 8, further comprising the step of providing a belt structure (5; 62) in a position radially external to said carcass structure (2; 61).

10. Process according to claim 8, wherein the step of providing the carcass structure (2; 61) is carried out on the supporting device (18; 28).

11. Process according to claim 9, wherein the step of providing the belt structure (5; 62) is carried out on the supporting device (18; 18'; 28).

12. Process according to claim 10 or 11, further comprising the step of positioning said supporting device (18; 18'; 28) in proximity of the feeding device (22, 25; 32, 34).

13. Process according to claim 10 or 11, further comprising the step of positioning the feeding device (22, 25; 32, 34) in proximity of said supporting device (18; 18'; 28).

14. Process according to claim 12 or 13, further comprising the step of delivering the at least one elongate element (24; 27) by means of said feeding device (22, 25; 32, 34).

15. Process according to claim 14, wherein the step of delivering is performed while carrying out a relative displacement between the feeding device (22, 25; 32, 34) and the supporting device (18; 18': 28).

16. Process according to claim 15, wherein the step of delivering is performed while rotating the supporting device (18; 18'; 28) about its rotation axis (X-X).

17. Process according to claim 16, wherein the relative displacement between the feeding device (22, 25; 32, 34) and the supporting device (18; 18'; 28) is carried out by imparting to the supporting device (18; 18'; 28) a translational movement along a direction substantially parallel to its rotation axis (X-X).

18. Process according to claim 1, wherein said position corresponds to the axially outer and radially inner position (C) of said second portion (6b).

19. Process according to claim 18, wherein the step of forming said second portion (6b) is carried out by completing the winding of said continuous elongate element (24) at an axially outer and radially outer position (D) of said second portion (6b).

20. Process according to claim 1, wherein the step of forming said first portion (6a) is carried out by starting the winding of said continuous elongate element (24) at an axially outer and radially inner position (A) of said first portion.

21. Process according to claim 20, wherein the step of forming said first portion (6a) is carried out by completing the winding of said continuous elongate element (24) at an axially outer and radially outer position (B) of said first portion.

22. Process according to claim 9, further comprising the step of providing at least one layer (51) in a position radially external to said belt structure (5; 62), said layer being made of an electrically conductive elastomeric material.

23. Process according to claims 1 and 22, wherein said at least one third portion (6c) radially extends from said electrically conductive layer (51) to a ground contact surface of the tyre (50).

24. Process according to claim 23, wherein said electrically conductive layer (51) is obtained by winding said at least one further elongate element (27).

25. Process according to claim 24, wherein the step of winding the at least one further elongate element (27) further comprises the steps of:
• forming a first portion (51b) of said at least one electrically conductive layer (51) by axially arranging side-by-side and/or radially superposing a plurality of coils of said at least one further elongate element;
• forming a second portion (51a) of said at least one electrically conductive layer (51) by axially arranging side-by-side and/or radially superposing a plurality of coils of said at least one further elongate element, and
• forming said third portion (6c) by axially arranging side-by-side and/or radially superposing a plurality of coils of said at least one further elongate element (27).

26. Process according to claim 10 or 11, wherein the supporting device (18; 18'; 28) consists of a manufacturing drum (18), an auxiliary drum (18') or a toroidal support (28).

27. Process according to claims 8 and 26, wherein the step of providing the carcass structure (2; 61) comprises the steps of producing and assembling the carcass structure on a toroidal support (28) -

28. Process according to claims 9 and 26, wherein the step of providing the belt structure (5; 62) comprises the steps of producing and assembling the belt structure on a toroidal support (28).

29. Process according to claim 26, wherein the toroidal support (28) is substantially rigid.

30. Process according to claim 1, wherein said at least one structural element is a tread band (6).

31. Process according to claim 1, wherein said first elastomeric material is an electrically insulative material.

32. Process according to claim 1, wherein said second elastomeric material is an electrically conductive material.

33. Process according to claim 1, wherein said at least one structural element is a liner.

34. Process according to claims 1 and 9, wherein said at least one structural element is an elastomeric insert (68) which is located under the belt structure (62) at the axially outer edges thereof.

35. Process according to claims 1 and 9, wherein said at least one structural element is an elastomeric insert (71, 72) which is located between the axially outer edges of the belt structure (62) and the tread band (63).

36. Process according to claim 1, wherein said at least one structural element is an elastomeric insert which is located in a tyre sidewall (7; 64).

## Patentansprüche

1. Verfahren zur Herstellung eines Reifens (1; 50; 60; 70), das umfasst: Ausbilden eines Rohreifens auf einer Unterstützungseinrichtung (18; 18'; 28), Ausformen und Aushärten des Rohreifens, wobei der Schritt des Ausbildens des Rohreifens das Bereitstellen wenigstens eines Strukturelements (6; 68; 71, 72) umfasst, das enthält:
- wenigstens einen ersten Abschnitt (6a; 68; 71), der aus einem ersten Rohelastomermaterial gefertigt ist, und
- wenigstens einen zweiten Abschnitt (6b; 72), der aus dem ersten Rohelastomermaterial gefertigt ist, wobei der wenigstens eine zweite Abschnitt von dem wenigstens einen ersten Abschnitt axial beabstandet ist,
wobei der Schritt des Bereitstellens des wenigstens einen Strukturelements umfasst:
- Ausbilden des wenigstens einen ersten Abschnitts durch Wickeln von wenigstens einem kontinuierlichen länglichen Element (24), das aus dem ersten Rohelastomermaterial gefertigt ist, mittels einer Dreh-/Translationsbewegung zwischen der Unterstützungseinrichtung und wenigstens einer Zufuhreinrichtung (22; 32) zum Zuführen des wenigstens einen kontinuierlichen länglichen Elements;
- Beginnen mit dem Aufbringen des kontinuierlichen länglichen Elements an einer Position, die von dem wenigstens einen ersten Abschnitt axial beabstandet ist, während das Zuführen des wenigstens einen kontinuierlichen länglichen Elements so fortgeführt wird, dass der wenigstens eine zweite Abschnitt ausgebildet wird, und
- Ausbilden des wenigstens einen zweiten Abschnitts durch Wickeln des wenigstens einen kontinuierlichen länglichen Elements, das aus dem ersten Rohelastomermaterial gefertigt ist, mittels einer Dreh-/Translationsbewegung zwischen der Unterstützungseinrichtung und der wenigstens einen Zufuhreinrichtung;
**dadurch gekennzeichnet, dass** das wenigstens eine Strukturelement wenigstens einen dritten Abschnitt (6c) umfasst, der aus einem zweiten Rohelastomermaterial gefertigt ist, das sich von dem ersten Elastomermaterial unterscheidet, wobei das Verfahren ferner den Schritt des Ausbildens des wenigstens einen dritten Abschnitts durch Wickeln von wenigstens einem weiteren kontinuierlichen länglichen Element (27) umfasst, das aus dem zweiten Rohelastomermaterial gefertigt ist, mittels einer Dreh-/Translationsbewegung zwischen der Unterstützungseinrichtung (18; 18'; 28) und wenigstens einer weiteren Zufuhreinrichtung (25; 34) zum Zuführen des wenigstens einen weiteren kontinuierlichen Elements, wobei die Schritte des Wickelns den Schritt des Ausbildens einer Mehrzahl von Wicklungen umfasst, die axial Seite an Seite und/oder radial überlagert angeordnet sind.

2. Verfahren nach Anspruch 1, bei dem der dritte Abschnitt (6c) zwischen dem wenigstens einen ersten Abschnitt (6a) und dem wenigstens einen zweiten Abschnitt (6b) angeordnet ist.

3. Verfahren nach Anspruch 1, bei dem der Schritt des Ausbildens des wenigstens eines dritten Abschnitts (6c) vor dem Schritt des Ausbildens des wenigstens einen ersten Abschnitts (6a) ausgeführt wird.

4. Verfahren nach Anspruch 1, bei dem der Schritt des Ausbildens des wenigstens einen dritten Abschnitts (6c) nach dem Schritt des Ausbildens des wenigstens einen ersten Abschnitts (6a) und dem Schritt des Ausbildens des wenigstens einen zweiten Abschnitts (6b) ausgeführt wird.

5. Verfahren nach Anspruch 1, bei dem die Dreh-/Translationsbewegung aus einer relativen Drehgeschwindigkeit kombiniert mit einer relativen Translationsgeschwindigkeit resultiert.

6. Verfahren nach Anspruch 5, ferner umfassend den Schritt des Erhöhens der relativen Drehgeschwindigkeit, während das Zuführen des wenigstens einen kontinuierlichen länglichen Elements (24) am Ende des Schritts des Bereitstellens des wenigstens einen ersten Abschnitts (6a) fortgeführt wird.

7. Verfahren nach Anspruch 5, ferner umfassend den Schritt des Erhöhens der relativen Translationsgeschwindigkeit, während das Zuführen des wenigstens einen kontinuierlichen länglichen Elements (24) am Ende des Schritts des Bereitstellens des wenigstens einen ersten Abschnitts (6a) fortgeführt wird.

8. Verfahren nach Anspruch 1, ferner umfassend den Schritt des Bereitstellens einer Rohkarkassenstruktur (2; 61) durch Zusammenfügen wenigstens einer Karkassenlage (69) mit wenigstens zwei ringförmigen Verstärkungsstrukturen (3; 66).

9. Verfahren nach Anspruch 8, ferner umfassend den Schritt des Bereitstellens einer Gürtelstruktur (5; 62) an einer Position, die bezüglich der Karkassenstruktur (2; 61) radial außen ist.

10. Verfahren nach Anspruch 8, bei dem der Schritt des Bereitstellens der Karkassenstruktur (2; 61) an der Unterstützungseinrichtung (18; 28) ausgeführt wird.

11. Verfahren nach Anspruch 9, bei dem der Schritt des Bereitstellens der Gürtelstruktur (5; 62) an der Unterstützungseinrichtung (18; 18'; 28) ausgeführt wird.

12. Verfahren nach Anspruch 10 oder 11, ferner umfassend den Schritt des Positionierens der Unterstützungseinrichtung (18; 18'; 28) in der Nähe der Zufuhreinrichtung (22, 25; 32, 34).

13. Verfahren nach Anspruch 10 oder 11, ferner umfassend den Schritt des Positionierens der Zufuhreinrichtung (22, 25; 32, 34) in der Nähe der Unterstützungseinrichtung (18; 18'; 28).

14. Verfahren nach Anspruch 12 oder 13, ferner umfassend die Schritte des Zuführens des wenigstens eines länglichen Elements (24; 27) mittels der Zufuhreinrichtung (22, 25; 32, 34).

15. Verfahren nach Anspruch 14, bei dem der Schritt des Zuführens ausgeführt wird, während eine relative Versetzung zwischen der Zufuhreinrichtung (22, 25; 32, 34) und der Unterstützungseinrichtung (18; 18'; 28) ausgeführt wird.

16. Verfahren nach Anspruch 15, bei dem der Schritt des Zuführens während einer Drehung der Unterstützungseinrichtung (18; 18'; 28) um deren Drehachse (X-X) ausgeführt wird.

17. Verfahren nach Anspruch 16, bei dem die relative Versetzung zwischen der Zufuhreinrichtung (22, 25; 32, 34) und der Unterstützungseinrichtung (18; 18'; 28) durch Vermitteln einer Translationsbewegung entlang einer Richtung, die im Wesentlichen parallel zu deren Drehachse (X-X) ist, auf die Unterstützungseinrichtung (18; 18'; 28) ausgeführt wird.

18. Verfahren nach Anspruch 1, bei dem die Position der axial äußeren und axial inneren Position (C) des zweiten Abschnitts (6b) entspricht.

19. Verfahren nach Anspruch 18, bei dem der Schritt des Ausbildens des zweiten Abschnitts (6b) durch Fertigstellen der Wicklung des kontinuierlichen länglichen Elements (24) an einer axial äußeren und radial äußeren Position (D) des zweiten Abschnitts (6b) ausgeführt wird.

20. Verfahren nach Anspruch 1, bei dem der Schritt des Ausbildens des ersten Abschnitts (6a) durch Beginnen der Wicklung des kontinuierlichen länglichen Elements (24) an einer axial äußeren und radial inneren Position (A) des ersten Abschnitts ausgeführt wird.

21. Verfahren nach Anspruch 20, bei dem der Schritt des Ausbildens des ersten Abschnitts (6a) durch Fertigstellen der Wicklung des kontinuierlichen länglichen Elements (24) an einer axial äußeren und radial äußeren Position (B) des ersten Abschnitts ausgeführt wird.

22. Verfahren nach Anspruch 9, ferner umfassend den Schritt des Bereitstellens wenigstens einer Schicht (51) an einer Position, die bezüglich der Gürtelstruktur (5; 62) radial außen ist, wobei die Schicht aus einem elektrisch leitfähigen Elastomermaterial gefertigt ist.

23. Verfahren nach Anspruch 1 und Anspruch 22, bei dem der wenigstens eine dritte Abschnitt (6c) sich radial von der elektrisch leitfähigen Schicht (51) zu einer Bodenkontaktoberfläche des Reifens (50) erstreckt.

24. Verfahren nach Anspruch 23, bei dem die elektrisch leitfähige Schicht (51) durch Wickeln des wenigstens einen weiteren länglichen Elements (27) erhalten wird.

25. Verfahren nach Anspruch 24, bei dem der Schritt des Wickelns des wenigstens einen weiteren länglichen Elements (27) ferner die Schritte umfasst:
- Ausbilden eines ersten Abschnitts (51b) der wenigstens einen elektrisch leitfähigen Schicht (51) durch axiales Anordnen Seite an Seite und/oder radiales Überlagern einer Mehrzahl von Wicklungen des wenigstens einen weiteren länglichen Elements;
- Ausbilden eines zweiten Abschnitts (51a) der wenigstens einen elektrisch leitfähigen Schicht (51) durch axiales Anordnen Seite an Seite und/oder radiales Überlagern einer Mehrzahl von Wicklungen des wenigstens einen weiteren länglichen Elements, und
- Ausbilden des dritten Abschnitts (6c) durch axiales Anordnen Seite an Seite und/oder radiales Überlagern einer Mehrzahl von Wicklungen des wenigstens einen weiteren länglichen Elements (27).

26. Verfahren nach Anspruch 10 oder 11, bei dem die Unterstützungseinrichtung (18; 18'; 28) aus einer Herstellungstrommel (18), einer Hilfstrommel (18') oder einer Ringunterstützung (28) besteht.

27. Verfahren nach Anspruch 8 und Anspruch 26, bei dem der Schritt des Bereitstellens der Karkassenstruktur (2; 61) die Schritte des Herstellens und Zusammenfügens der Karkassenstruktur an einer Ringunterstützung (28) umfasst.

28. Verfahren nach Anspruch 9 und Anspruch 26, bei dem der Schritt des Bereitstellens der Gürtelstruktur (5; 62) die Schritte des Herstellens und Zusammenfügens der Gürtelstruktur an einer Ringunterstützung (28) umfasst.

29. Verfahren nach Anspruch 26, bei dem die Ringunterstützung (28) im Wesentlichen steif ist.

30. Verfahren nach Anspruch 1, bei dem das wenigstens eine Strukturelement ein Laufflächenband (6) ist.

31. Verfahren nach Anspruch 1, bei dem das erste Elastomermaterial ein elektrisch isolierendes Material ist.

32. Verfahren nach Anspruch 1, bei dem das zweite Elastomermaterial ein elektrisch leitfähiges Material ist.

33. Verfahren nach Anspruch 1, bei dem das wenigstens eine Strukturelement eine Einlage ist.

34. Verfahren nach Anspruch 1 und Anspruch 9, bei dem das wenigstens eine Strukturelement ein Elastomereinsatz (68) ist, der unter der Gürtelstruktur (62) an den axial äußeren Rändern davon positioniert ist.

35. Verfahren nach Anspruch 1 und Anspruch 9, bei dem das wenigstens eine Strukturelement ein Elastomereinsatz (71, 72) ist, der zwischen den axial äußeren Rändern der Gürtelstruktur (62) und dem Laufflächenband (63) positioniert ist.

36. Verfahren nach Anspruch 1, bei dem das wenigstens eine Strukturelement ein Elastomereinsatz ist, der in einer Reifenseitenwand (7; 64) positioniert ist.

## Revendications

1. Procédé de fabrication d'un pneu (1, 50, 60, 70) comprenant: la formation d'un pneu brut sur un dispositif d'appui (18; 18'; 28), le moulage et la vulcanisation dudit pneu brut, dans lequel l'étape de formation du pneu brut comprend la fourniture d'au moins un élément de structure (6; 68; 71,72) comprenant:
• au moins une première partie (6a; 68; 71) constituée d'une première matière élastomère brute, et
• au moins une deuxième partie (6b; 72) constituée de ladite première matière élastomère brute, l'au moins une deuxième partie étant axialement espacée de l'au moins une première partie,
ladite étape de fourniture de l'au moins un élément de structure comprenant:
• la formation de l'au moins une première partie en enroulant au moins un élément allongé continu (24) constitué de ladite première matière élastomère brute au moyen d'un mouvement de roto-translation entre le dispositif d'appui et au moins un dispositif d'alimentation (22; 32) pour la fourniture de l'au moins un élément allongé continu;
• commencer à appliquer l'élément allongé continu dans une position axialement espacée de l'au moins une première partie tout en continuant la fourniture de l'au moins un élément allongé continu de manière à former l'au moins une seconde partie, et
• la formation de l'au moins une deuxième partie par enroulement dudit au moins un élément allongé continu constitué de ladite première matière élastomère brute au moyen d'un mouvement de roto-translation entre le dispositif d'appui et au moins un dispositif d'alimentation;
**caractérisé en ce que** ledit au moins un élément de structure comprend au moins une troisième partie (6c) constituée d'une seconde matière élastomère brute différente de ladite première matière élastomère brute, ledit procédé comprenant en outre l'étape de formation de l'au moins une troisième partie par enroulement d'au moins un élément allongé continu supplémentaire (27) constitué de ladite seconde matière élastomère brute au moyen d'un mouvement de roto-translation entre le dispositif d'appui (18; 18'; 28) et au moins un dispositif d'alimentation supplémentaire (25; 34) pour la fourniture de l'au moins un élément allongé continu supplémentaire, dans lequel les étapes d'enroulement comprennent l'étape de formation de plusieurs boucles disposées axialement côte à côte et/ou superposées radialement.

2. Procédé selon la revendication 1, dans lequel ladite troisième partie (6c) est interposée entre l'au moins une première partie (6a) et l'au moins une seconde partie (6b).

3. Procédé selon la revendication 1, dans lequel l'étape de formation de l'au moins une troisième partie (6c) est effectuée avant l'étape de formation de l'au moins une première partie (6a).

4. Procédé selon la revendication 1, dans lequel l'étape de formation de l'au moins une troisième partie (6c) est réalisée après l'étape de formation de l'au moins une première partie (6a) et l'étape de formation de l'au moins une seconde partie (6b).

5. Procédé selon la revendication 1, dans lequel ledit mouvement de roto-translation est le résultat d'une vitesse de rotation relative combinée avec une vitesse de translation relative.

6. Procédé selon la revendication 5, comprenant en outre l'étape d'augmenter la vitesse de rotation relative, tout en continuant la fourniture de l'au moins un élément allongé continu (24) à la fin de l'étape de fourniture de ladite au moins une première partie (6a).

7. Procédé selon la revendication 5, comprenant en outre l'étape d'augmenter la vitesse de translation relative, tout en continuant la fourniture de l'au moins un élément allongé continu (24) à la fin de l'étape de fourniture de ladite au moins une première partie (6a).

8. Procédé selon la revendication 1, comprenant en outre l'étape de fourniture d'une structure de carcasse brute (2; 61) par l'assemblage d'au moins un pli de la carcasse (69) avec au moins deux structures annulaires de renforcement (3; 66).

9. Procédé selon la revendication 8, comprenant en outre l'étape de fourniture d'une structure de ceinture (5, 62) dans une position externe radialement à ladite structure de carcasse (2; 61).

10. Procédé selon la revendication 8, dans lesquels l'étape de fourniture de la structure de carcasse (2; 61) est réalisée sur le dispositif d'appui (18; 28).

11. Procédé selon la revendication 9, dans lequel l'étape de fourniture de la structure de ceinture (5; 62) est réalisée sur le dispositif d'appui (18; 18'; 28).

12. Procédé selon la revendication 10 ou 11, comprenant en outre l'étape de positionnement dudit dispositif de support (18; 18'; 28) à proximité du dispositif d'alimentation (22, 25; 32, 34).

13. Procédé selon la revendication 10 ou 11, comprenant en outre l'étape de positionnement du dispositif d'alimentation (22, 25; 32, 34) à proximité dudit dispositif de support (18; 18 '; 28).

14. Procédé selon la revendication 12 ou 13, comprenant en outre l'étape de livraison de l'au moins un élément allongé (24; 27) au moyen dudit dispositif d'alimentation (22, 25; 32, 34).

15. Procédé selon la revendication 14, dans lequel l'étape de livraison est réalisée tout en effectuant un déplacement relatif entre le dispositif d'alimentation (22, 25; 32, 34) et le dispositif d'appui (18; 18 '; 28).

16. Procédé selon la revendication 15, dans lequel l'étape de livraison est effectuée pendant la rotation du dispositif de support (18; 18 ', 28) autour de son axe de rotation (X-X).

17. Procédé selon la revendication 16, dans lequel le déplacement relatif entre le dispositif d'alimentation (22, 25; 32, 34) et le dispositif d'appui (18; 18 '; 28) est réalisée en donnant à l'appareil d'appui (18; 18'; 28) un mouvement de translation selon une direction sensiblement parallèle à son axe de rotation (X-X).

18. Procédé selon la revendication 1, dans lequel ladite position correspond à la position axialement extérieure et radialement intérieure (C) de ladite deuxième partie (6b).

19. Procédé selon la revendication 18, dans lequel l'étape de formation de ladite deuxième partie (6b) est effectuée en achevant l'enroulement dudit élément allongé continu (24) à une position axialement extérieure et radialement extérieure (D) de ladite deuxième partie (6b).

20. Procédé selon la revendication 1, dans lequel l'étape de formation de ladite première partie (6a) est effectuée en commençant l'enroulement dudit élément allongé continu (24) à une position axialement extérieure et radialement intérieure (A) de ladite première partie.

21. Procédé selon la revendication 20, dans lequel l'étape de formation de ladite première partie (6a) est effectuée en achevant l'enroulement dudit élément allongé continu (24) à une position axialement extérieure et radialement extérieure (B) de ladite première partie.

22. Procédé selon la revendication 9, comprenant en outre l'étape de fourniture de l'au moins une couche (51) dans une position radialement externe à ladite structure de ceinture (5, 62), ladite couche étant constituée d'une matière élastomère électriquement conducteur.

23. Procédé selon les revendications 1 et 22, dans lequel ladite au moins une troisième partie (6c) s'étend radialement depuis ladite couche électriquement conductrice (51) jusqu'à une surface de contact au sol du pneu (50).

24. Procédé selon la revendication 23, dans lequel ladite couche électriquement conductrice (51) est obtenue par enroulement dudit au moins un élément allongé supplémentaire (27).

25. Procédé selon la revendication 24, dans lequel l'étape d'enroulement de l'au moins un élément allongé supplémentaire (27) comprend en outre les étapes de:
• formation d'une première partie (51b) de ladite au moins une couche électriquement conductrice (51) en arrangeant axialement côté à côte et/ou en superposant radialement plusieurs de boucles dudit au moins un élément allongé supplémentaire,
• formation d'une deuxième partie (51a) de ladite au moins une couche électriquement conductrice (51) en arrangeant axialement côte à côte et/ou en superposant radialement plusieurs boucles dudit au moins un élément allongé supplémentaire, et
• formation de ladite troisième partie (6c) en arrangeant axialement côte à côte et/ou en superposant radialement plusieurs boucles dudit au moins un élément allongé supplémentaire (27).

26. Procédé selon la revendication 10 ou 11, dans lequel le dispositif d'appui (18; 18'; 28) se compose d'un tambour de fabrication (18), un tambour auxiliaire (18 ') ou un support torique (28).

27. Procédé selon les revendications 8 et 26, dans lequel l'étape de fourniture de la structure de carcasse (2; 61) comprend les étapes de production et d'assemblage de la structure de carcasse sur un support torique (28).

28. Procédé selon les revendications 9 et 26, dans lequel l'étape de fourniture de la structure de ceinture (5, 62) comprend les étapes de production et d'assemblage de la structure de ceinture sur un support torique (28).

29. Procédé selon la revendication 26, dans lequel le support torique (28) est sensiblement rigide.

30. Procédé selon la revendication 1, dans lequel ledit au moins un élément de structure est une bande de roulement (6).

31. Procédé selon la revendication 1, dans lequel ladite première matière élastomère est une matière électriquement isolante,

32. Procédé selon la revendication 1, dans lequel ladite seconde matière élastomère est une matière électriquement conductrice.

33. Procédé selon la revendication 1, dans lequel ledit au moins un élément de structure est une garniture.

34. Procédé selon les revendications 1 et 9, dans lequel l'au moins un élément de structure est un insert en élastomère (68) qui est situé sous la structure de ceinture (62) sur les bords axialement extérieurs de celle-ci.

35. Procédé selon les revendications 1 et 9, dans lequel ledit au moins un élément de structure est un insert en élastomère (71,72) qui est situé entre les bords axialement extérieurs de la structure de ceinture (62) et la bande de roulement (63).

36. Procédé selon la revendication 1, dans lequel ledit au moins un élément de structure est un insert en élastomère qui est situé dans un flanc du pneu (7; 64).
